# EUROPEAN PATENT APPLICATION

(11) **EP 3 621 191 A1**
(43) Date of publication of application: **11.03.2020**
(21) Application number: 18193026.4
(22) Date of filing: 06.09.2018
(51) Int. Cl.: H02M 1/32, H02M 7/483

(54) **PARALLEL CONNECTION WITHIN MMC CELLS BY DECOUPLING DC SECTION**

(71) Applicant: ABB Schweiz AG, 5400 Baden (CH)
(72) Inventor: MAIBACH, Philippe, 5037 Muhen (CH); STEINKE, Juergen, 79774 Albbruck (DE)
(74) Representative: Kransell & Wennborg KB

(57) **Abstract**

The Invention discloses an assembly and a modular converter cell comprising at least two circuit arrangements, wherein each of the at least two circuit arrangements comprises a capacitor with an electrically positive terminal and with an electrically negative terminal and a first series connection of two switches. The first terminal of the first series connection of the two switches is connected with the electrically positive terminal of the capacitor and a second terminal of the first series connection of switches is connected with the electrically negative terminal of the capacitor. The second terminals of the at least two circuit arrangements are electrically connected, wherein an impedance with a magnitude of a complex resistance greater zero is arranged between the electrically positive terminals of the capacitors.

## Description

### FIELD OF INVENTION

Embodiments of the present disclosure generally relate to power conversion systems and, more particularly, to a multilevel power conversion system comprising a multitude of single cells (modular multilevel cell).

### BACKGROUND OF INVENTION

Power converters may be used to convert AC power to DC power at the transmitting substation and to convert the transmitted DC power back to AC power at the receiving substation. In one approach, these power converters have a modular multilevel structure where each phase has a stacked arrangement of modules or cells. Futhermore, power converters are used in FACTS systems (e.g. STATCOM for reactive power compensation, static frequency converters).

Modular multilevel converters consist of cells with certain voltage and current capacity. The cells contain switches, preferably semiconductor switches. The switches in a cell can be arranged in a so-called full-bridge or half-bridge topology.

In order to increase converter power rating, at least two semiconductors can be connected in parallel per switching position of each cell. The current flowing is divided into parallel current paths and, according to the power rating of the semiconductors, the current capacity of the cell can be increased by factors. In this way, the overall power of the converter may be increased.

To increase the current capacity of an MMC (Modular Multilevel Converter), AC sides of several MMC cells may be hard parallel connected, as disclosed by DE 102015222280. In DE 102015222280, parallel connection is done on the AC side of MMC cells, using decoupling reactors.

Simply parallel switching of the semiconductors and their capacitors to increase a current capacity, may cause problems. A hard parallel connection of both switches (semiconductors) and the related DC capacitors may lead to a potentially unbalanced steady-state current loading of the semiconductors due to an unbalanced on-state voltage of the semiconductors and/or unmatched gate threshold voltage levels. Timing difference between the parallel gate signals further result in transient current deviations. Therefore, capacitors on a DC side or DC capacitor banks corresponding to each of a semiconductor in an MMC cell may be not hard paralleled.

Steady-state current unbalance may be primarily caused by on-state voltage difference of semiconductors assuming that the DC capacitor voltage of all paralleled MMC cells semiconductors may be the same. Unbalanced current sharing between parallel connected semiconductors lead to an unbalanced thermal load within the parallel connected switches/semiconductors and therefore potentially increased overall losses and unbalanced aging.

To balance currents, an active control of the gate voltage on the semiconductors, the switches respectively, is a possible way. However, this requires the introduction of current sensors which are capable of measuring semiconductor currents as well as a current balancing control. However, this adds additional parts and cost to a power converter and makes the system more complex, which in turn negatively influences reliability.

Therefore, the present application seeks to provide a simpler and more robust solution to balance currents of parallel switched semiconductors in an MMC cell.

### SUMMARY OF INVENTION

In order to address the foregoing and other potential problems, embodiments of the present disclosure propose:

In a first aspect, an assembly is disclosed, which may comprise at least two circuit arrangements, wherein each of the at least two circuit arrangements may comprise a capacitor. The capacitor may have a first electrical terminal and a second electrical terminal.

Each of the at least two circuit arrangements may additionally comprise a first series connection of two switches. A first terminal of the first series connection of the two switches may be connected with the first electrical terminal of the capacitor and a second terminal of the first series circuit of switches may be connected with the second electrical terminal of the capacitor. The second terminals of the at least two circuit arrangements may be electrically connected. An impedance with a magnitude of a complex resistance greater zero may be arranged between the first electrical terminals of the capacitors.

In a second aspect, a modular converter cell for a multilevel converter is disclosed which comprises aspects of an assembly according to other embodiments.

### BRIEF DESCRIPTION OF DRAWINGS

Embodiments of the present disclosure will be presented in the sense of examples and their advantages may be explained in greater detail below, with reference to the accompanying drawings, wherein:
- FIG. 1: shows the principle of a halfbridge cell with two switches and a capacitor arranged parallel to the switches;
- FIG. 2: shows the principle of a fullbridge cell with four switches and two capacitors;
- FIG. 3: shows a half-bridge arrangement with parallel switches and capacitors according to embodiments of the invention;
- FIG. 4: shows a full-bridge arrangement with parallel switches and capacitors according to embodiments of the invention;
- FIG. 5: shows embodiments of impedances in embodiments of the invention;
- Fig. 6: shows a half-bridge arrangement according to Figure 3 in an alternative embodiment.

### DETAILED DESCRIPTION OF EMBODIMENTS

Hereinafter, the principle and spirit of the present disclosure will be described with reference to the illustrative embodiments. It should be understood, all these embodiments are given merely for the skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase may be intended to have a special meaning, i.e., a meaning other than that understood by skilled artisans, such a special definition will be expressly set forth in the specification in a definitional manner that directly and unequivocally provides the special definition for the term or phrase.

The term "series connection" shall be considered as being equivalent to "series circuit" when a connection of two switches is meant. A connection point between two switches, may be referred to e.g. "mid-point connection" or "mid-connection terminal". E.g. in case that transistors are used as switches, the term "mid-point connection" may refer to the point, where an emitter and a collector contact of two transistors are electrically connected.

A term like "terminal", as used herein may have the meaning of an electrical contact point, to which other circuits may be connected. A terminal can be a terminal with a screw, a welded connection or a connection which can be welded. A terminal can be a metallic contact terminal with a male and a female side. Terminal may not be considered as a restricting term only used for connecting circuitry e.g. outside a cell or electronic device.

Modular multilevel converters may consist of a series connection of cells with certain voltage and current capacity. In order to increase converter power rating, it may be proposed, to connect at least two semiconductors in parallel per switching position of each cell. AC sides of several MMC cells may be hard parallel connected.

The present application discloses that on DC side, DC capacitors or DC capacitor banks corresponding to each semiconductor may not be hard parallel switched. The capacitors of the DC side shall be connected to the semiconductors, or better said the branches, through a decoupling impedance.

This impedance may preferably be a resistor. Alternatively, it can be an inductor or a combination of inductor and resistor (series or parallel). The impedance needs to be sufficiently low in order to keep the voltage at each DC circuit equal compared to all other parallel connected DC circuits.

An imbalance of steady-state current is primarily caused by on-state voltage difference of semiconductors assuming that the DC capacitor voltage of all paralleled MMC cells semiconductors is the same.

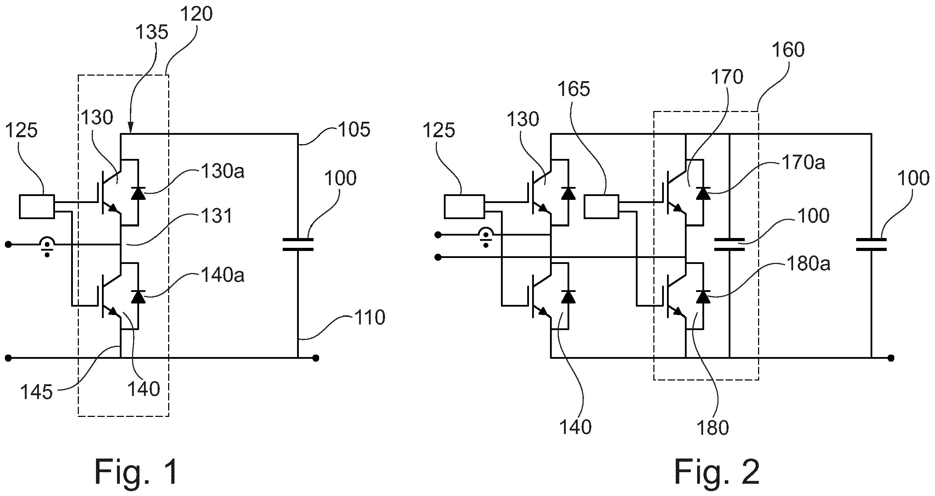

If e.g. two parallel half-bridges with a capacitor, arranged parallel to each series connection of the switches, (For such an arrangement, see fig. 1; two switches 130, 140 are arranged in a series connection with a mid-connection 131) would be switched to "+", starting with identical capacitor voltages, current sharing were determined by the difference in on-state voltage.

It is now considered that two of the half-bridges from fig. 1 may be switched in parallel so that a current is distributed over two series connections 120. The switches of both series connections 120 may be controlled by the same control unit 125 Assuming that the coupling resistance were at least an order of magnitude higher than the differential resistance of the transistors (switches) 130, 140, preferably IGBT's, an uneven current sharing in both series circuits 120 would result in capacitor 100 voltages drifting apart, which immediately would counter the unequal current sharing. The coupling resistance is in a range 5 to 20 times higher than a differential resistance of the semiconductors.

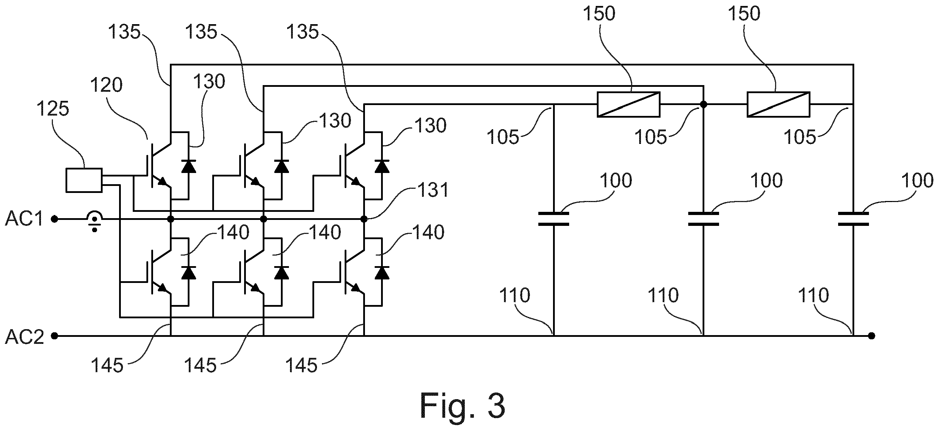

A few hundred mV difference might be sufficient to balance the currents. The coupling resistors 150 as shown in fig. 3 may not be directly contributing to this function, but are required to keep the capacitor voltages equal during zero vector or blocked pulses of all semiconductors of the cell. An additional advantage is, that in case of a fault of a semiconductor the coupling impedance may limit the current coming from other capacitors within the same parallel connection.

Therefore, in a first aspect, an assembly comprising at least two circuit arrangements may be disclosed. Each of the at least two circuit arrangements may comprise a capacitor 100 with a first electrical terminal 105 and with a second electrical terminal 110 and a first series connection (series circuit) 120 of two switches 130, 140. This may represent a standard half bridge circuit with a parallel capacitor.

A first terminal 135 of the first series circuit (series connection) 120 of the two switches 130, 140 may be connected with the first electrical terminal 105 of the capacitor 100 and a second terminal 145 of the first series circuit 120 of switches 130, 140 may be connected with the second electrical terminal 110 of the capacitor 100; wherein the second terminals 145 of the at least two circuit arrangements may be electrically connected.

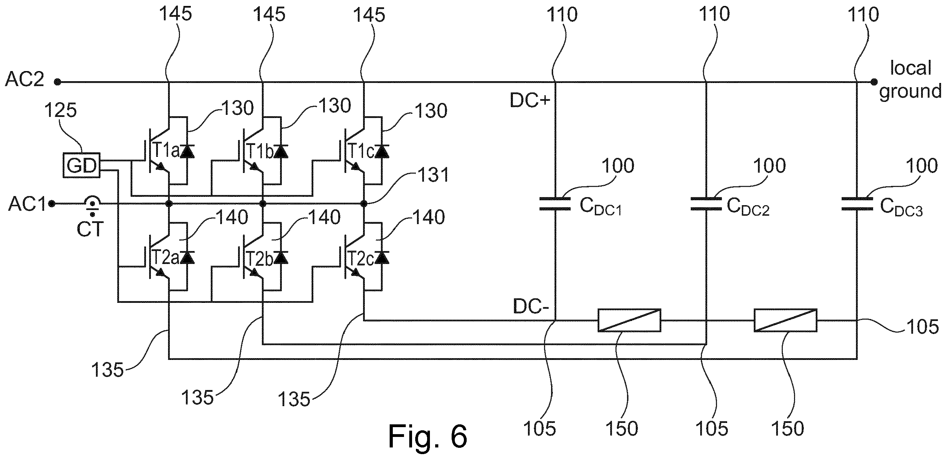

An impedance 150 with a magnitude of a complex resistance greater than zero may be arranged as a decoupling impedance between the first electrical terminals 105 of the capacitors 100. Since a wire may have a very low but measurable inductivity and resistance, even a wire connection may be considered as an impedance from an electrotechnical point of view. Fig. 3 shows a half bridge with three parallel series circuits (branches) of semiconductor switches 130, 140. Fig. 6 shows an alternative embodiment. In Fig. 3, impedances 150 are arranged between collectors of the semiconductors 130 (transistors) whereas in Fig. 6, impedances 150 are arranged between emitters of the transistors 140. The operation mode may be the same.

In case of a reversed polarity, the impedance may be arranged on the negative side between the negative terminals 110 of the capacitors.

The complex resistance may be in a range that is 5 to 20 times higher than the differential resistance of a semiconductor (typical 10 mΩ to 100mΩ). The differential resistance of a semiconductor can be determined as a gradient from the characteristic curves of a datasheet of a semiconductor/transistor.

In order to reduce the risk of heavy high-frequency oscillation between different DC circuits, the impedance 150 may need to provide sufficient damping. As an additional requirement, the impedance needs to be sufficiently low in order to keep the voltage at each DC circuit sufficiently equal, compared to all other parallel connected DC circuits.

Fig. 1 shows in an exemplary way a half bridge, comprising two switches 130, 140 in a series connection. Generally, the switches may comprise a semiconductor like a transistor and a diode 130a, 140a. The diode is switched antiparallel to the conducting direction of the transistor. The diode 130a, 140a may be an integral part of the transistor (power transistor).

A transistor only allows for a current flow in one direction, in this case from Collector to emitter. The diode 130a, 140a as a semiconductor allows for a current flow in a direction opposite to the direction which the transistors 130, 140 allow. Preferably the diode ("free-wheel diode") is adapted to bear the same power (or current) as the transistor. A capacitor 100 is switched parallel to the switches.

In a further aspect, an assembly according to other embodiments is disclosed, wherein each circuit arrangement comprises a second series circuit 160 of two switches 170, 180. In this respect, a "full-bridge" arrangement may be formed. The second series circuit may be independent and, in particular, independently controllable from the first series connection.

Fig. 2 shows a so-called "full-bridge" and is, simply spoken, a parallel combination of two "half-bridges" as shown in Fig. 1. Each series connections of the switches is controlled by an own control unit 125, 165, wherein a first terminal 175 of the second series circuit 160 of two switches 170, 180 may be connected with the electrically positive terminal 105 of the capacitor 100 and a second terminal 185 of the second series circuit 160 of switches 170, 180 may be connected with the electrically negative terminal 110 of the capacitor 100.

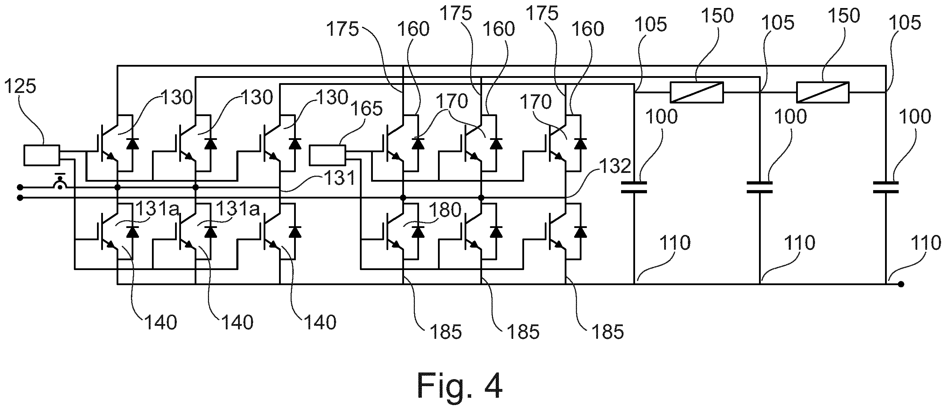

Fig. 4 shows a "full-bridge" with six parallel series circuits or branches. The series circuits or branches 120, 160 are grouped in two subsets with three branches in each subset. A control unit 125, 165 is assigned to each subset to independently control the switches in each subset of branches. Fig. 4 shall not be considered as limiting the number of branches in a full bridge or half bridge arrangement respectively. Additional parallel branches can be added to each subset at any time, together with respective capacitors and impedances, in case it may be advantageous for a better current distribution.

In yet a further aspect, an assembly according to other embodiments, it is disclosed, that the switches 130, 140, 170, 180 may comprise semiconductors. The semiconductors may be, for example, SiC MOS FETs ((SiC= Silicon carbide) or IGBT's (Insulated Gate Bipolar Transistors)). The kind of semiconductor is not limiting and future semiconductors, suitable to cover the needs of a power converter or cell according to the present application, may be .also included

In a further aspect, an assembly according to other embodiments is disclosed, wherein the switches 130, 140 in the first series circuit 120 of two switches 130, 140 may be configured to be controlled by a first control unit 125. See e.g. the assembly in Fig. 3. This assembly can be considered as a "half-bridge" arrangement. The control unit 125 is configured to put switches in an "on" or "off state, by activating or deactivating control terminals on the switches (semiconductors). In particular, the control terminals on the switches may be base or gate terminals arranged on the semiconductors (transistors).

Fig. 3 shows six switches, switched parallel. Mid-connection points 131 (the point where the two switches 130, 140 are electrically connected) form an AC terminal. The six switches 130, 140 are arranged in three parallel series circuits 135.

In a further aspect of the invention, an assembly according to other embodiments is disclosed, wherein the switches 170, 180 in the second series circuit 160 of two switches 170, 180 may be configured to be controlled by a second control unit 165. The second control unit 165 controls the switches in the second series circuit 160 independently from the switches in the first series circuit. Fig. 4 shows such an arrangement which may be denoted as a "full bridge" arrangement. The second control unit 165 may be arranged in the multilevel cell.

A complete cycle, comprising a negative half cycle and a positive half cycle, can be measured between AC terminals AC1, AC2. It may also be possible, that a full bridge arrangement can be controlled by one single control unit. In this case it may be assured that the control unit is adapted to control the first series connections 120 of two switches independently from the second serious connection 160 of two switches.

In a further embodiment, the control units 125, 165 may be configured to measure parameters of the cells or the switches and use them to control a power converter. The power converter may comprise a multitude of multilevel cells, preferably arranged in a series connection. The control units, beside the function of activating/deactivating the switches, respectively semiconductors e.g. transistors, may further be configured to measure e.g. current flowing through the switches, temperature of a semiconductor (transistor), timing, saturation current through the semiconductors, and other parameters relevant for operation of the cell or a power converter comprising the cells. The control units 125, 165 may be linked by a data bus. Each cell may comprise its own control unit.

Control units for the cells may also be arranged outside. The data bus may preferably be an optical bus with light conductors. Light conductors have the advantage that the data cannot be disturbed by electrical or magnetic fields as it could happen with electrical data transmission via normal metallic wires. It is important, that the timing between the individual cells is as exact as possible, to achieve an optimal high-voltage sinusoidal AC output.

In a further aspect, an assembly according to other embodiments is disclosed. In this aspect of the application, the control units 125, 165 may control a switching status of the switches 130, 140, 170, 180. Additionally, the control units may control and process one or more parameters of the circuit arrangements, the parameters may be e.g. from the group temperature, voltage, current. The control units may have a processing unit, adapted to process data from these parameters. The control units may have I/O ports for connecting sensor equipment. Further, the control units may be connected to a databus, which can be an optical databus (optical wave-guide) or an electrical data transmission, preferably wired.

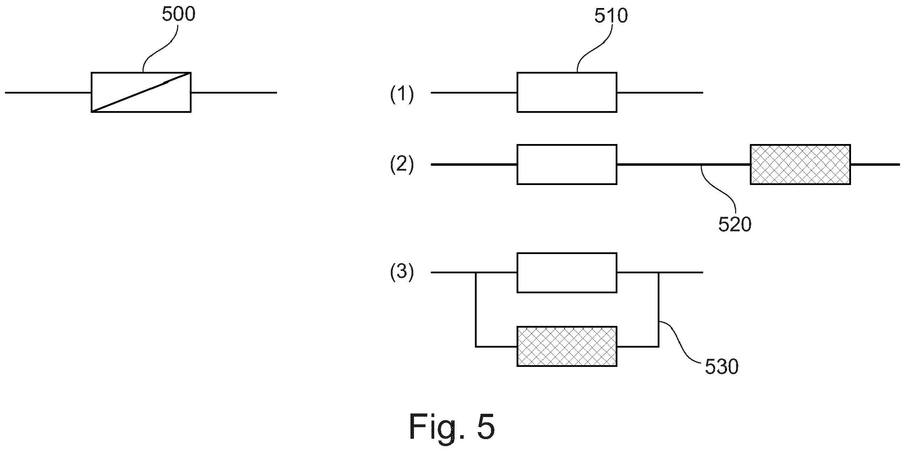

In a further aspect, an assembly according to other embodiments is disclosed, that the impedance 150 may be a resistor or an inductance or a combination of a resistor and an inductance. Fig. 5 shows an impedance 500 which symbolises a complex resistance. A simple resistor, which would in the ideal case not comprise a complex part, is denoted by 510. 520 shows a series connection of an inductor and a resistor. 530 shows a parallel connection of inductor and a resistor. 520 and 530 represent impedances which may be used to decouple the capacitors form parallel switched cells or switches. To connect the impedances with the capacitors, the cells may have terminals on which the impedances 150 can be connected. The connecting terminals for the impedances 150 may be inside or outside the cell. Preferably, in case that cells are arranged parallel to increase the current capacity, impedance may be attached between terminals on the outside of the cell (cell housing).

In a further aspect, a modular converter cell for a multilevel converter is disclosed, which comprises an assembly according to embodiments of the disclosure. Such a converter cell may be part of a power converter. A multitude of these cells, connected in series, form a power converter as e.g. used in HVDC power transmission, FACTS systems or static frequency converter systems.

In a further aspect, a modular converter cell for a multilevel converter according to other embodiments may be disclosed. The capacitors 100 may be arranged within the converter cell or outside the converter cell. Preferably, the capacitor or the capacitors 100 may be part of the multilevel cell i.e. arranged within the cell. Capacitors may be, for some reasons, arranged outside the cells.

In a further aspect, a modular converter cell for a multilevel converter according to other embodiments is disclosed which may further comprise a network interface for connecting the cell to a data network. The converter cell or a converter, comprising a multitude of such cells may operatively be connected to the network interface for at least one of carrying out a command received from the data network and sending device status information to the data network.

In yet a further aspect, a modular converter cell for a multilevel converter according to other embodiments is disclosed. The network interface may be further be configured to transceive digital signal/data between the modular converter cell or converter, comprising a multitude of such cells and the data network. The digital signal/data may include operational command and/or information about the converter cell or the network and may further comprise a processing unit for converting the signal into a digital signal or processing the signal. It may be possible to control the modular converter cell or the multilevel converter which comprises the cells, by the network.

Generally, the present invention discloses a parallel connection of power switches, like transistors, and their dedicated capacitors within a modular multilevel converter (MMC) cell by decoupling the DC section via an impedance (complex resistance).

In other words, the DC circuits corresponding to each parallel connected semiconductor are not directly parallel connected, as it may be done in the prior art at the AC side of a cell. The decoupling may be realized with a decoupling impedance which is switched between terminals of the capacitors of the cell. Impedances may preferably formed by a resistor, an inductance, or a combination of them both as shown in Fig. 5.

In order to reduce the risk of heavy high-frequency oscillation between the different DC circuits, the impedance needs to provide sufficient damping. Additionally, the impedance needs to be sufficiently low, in order to keep the voltage at each DC circuit sufficiently equal compared to all other parallel connected DC circuits.

Further, features illustrated or described as part of one embodiment can be used on or in conjunction with other embodiments to yield yet a further embodiment. It is intended that the description includes such modifications and variations.

While the foregoing is directed to embodiments of the disclosure, other and further embodiments of the disclosure may be devised without departing from the basic scope thereof, and the scope thereof is determined by the claims that follow.

## Claims

1. An assembly comprising
at least two circuit arrangements, wherein
each of the at least two circuit arrangements comprises:
a capacitor (100) with a first electrical terminal (105) and a second electrical terminal (110) and a first series connection (120) of two switches (130, 140), wherein
a first terminal (135) of the first series connection (120) of the two switches (130, 140) is connected with the first electrical terminal (105) of the capacitor (100) and a second terminal (145) of the first series connection (120) of switches (130, 140) is connected with the second electrical terminal (110) of the capacitor (100); wherein
the second terminals (145) of the at least two circuit arrangements are electrically connected, wherein
an impedance (150) with a magnitude of a complex resistance greater zero is arranged between the first electrical terminals (105) of the capacitors (100).

2. The assembly according to claim 1, wherein
each circuit arrangement comprises a second series connection (160) of two switches (170, 180), wherein
a first terminal (175) of the second series connection (160) of two switches (170, 180) is connected with the first electrical terminal (105) of the capacitor (100) and a second terminal (185) of the second series connection (160) of switches (170, 180) is connected with the second electrical terminal (110) of the capacitor (100).

3. The assembly of any of claims 1 to 2, wherein the switches (130, 140, 170, 180) are semiconductors.

4. The assembly of any of the preceding claims, wherein the semiconductors comprise transistors.

5. The assembly of any of claims 1 to 4, wherein
the switches (130, 140) in the first series circuit (120) of two switches (130, 140) are configured to be controlled by a first control unit (125).

6. The assembly of any of claims 1 to 5, wherein
the switches (170, 180) in the second series circuit (160) of two switches (170, 180) are configured to be controlled by a second control unit (165).

7. The assembly of any of claims 1 to 6, wherein the control units (125, 165) control a switching status of the switches (130, 140, 170, 180) and/or one or more parameters of the circuit arrangements, the parameters are from the group temperature, voltage, current.

8. The assembly of any of claims 1 to 7, wherein the impedance (150) is a resistor or an inductance or a combination of a resistor and an inductance.

9. A modular converter cell for a multilevel converter, which comprises an assembly according to any of claims 1 to 7.

10. The modular converter cell according to claim 9, wherein the capacitors (100) are arranged within the converter cell or outside the converter cell.

11. The modular converter cell according to claim 9 and 10, further comprises a network interface for connecting the cell to a data network, wherein
the converter cell is operatively connected to the network interface for at least one of carrying out a command received from the data network and sending device status information to the data network.

12. The modular converter cell according to any of claims 9 to 11, wherein the network interface is configured to transceive digital signal/data between the modular converter cell and the data network, wherein
the digital signal/data include operational command and/or information about the converter cell or the network and further comprises a processing unit for converting the signal into a digital signal or processing the signal.
